# EUROPEAN PATENT SPECIFICATION

(11) **EP 1 819 179 B1**
(45) Date of publication and mention of the grant of the patent: **15.10.2008**
(21) Application number: 07109230.8
(22) Date of filing: 23.11.2005
(51) Int. Cl.: H04Q 7/22

(54) **Method for routing SMS messages**
Verfahren zur Leitweglenkung von SMS Nachrichten
Procédé pour le routage de messages SMS

(43) Date of publication of application: 15.08.2007
(62) Divisional of application: 05257228.6
(73) Proprietor: Research In Motion Limited, Waterloo, Ontario N2L 3W8 (CA)
(72) Inventor: Harris, Ian, Devizes, Wiltshire SN10 2LD (GB)
(74) Representative: Fennell, Gareth Charles

(56) References cited:
- EP-A- 1 575 012
- GB-A- 2 385 241
- US-A- 6 052 591
- US-A1- 2004 140 928
- US-A1- 2005 070 314

## Description

### FIELD OF THE INVENTION

The present invention generally relates to mobile communication, and more specifically to a system and a method for routing a short message originated by a wireless mobile communication device to a relevant local destination based upon characteristics of the short message.

### BACKGROUND OF THE INVENTION

In today's wireless mobile communication systems, a user of a mobile wireless communication device can often communicate by sending a Short Message through the Short Message Service ("SMS"). When the user sends a SMS message, it is usually routed to the user's home network SMS Service Center ("SMS-SC"). For example, if the user's home network were in New York, NY, his SMS messages would be routed to his home network SMS-SC in New York, NY even when he sends an SMS message while is roaming in London, England, and is out of his home network. For most applications, routing SMS messages to the user's home network SMS-SC presents no problem, but there are certain situations, such an SMS message requesting emergency assistance, where it would be preferable for the SMS message to be sent to an SMS-SC in the currently visited network and its content sent on an entity providing local emergency assistance. Presently, to provide local emergency assistance to the user, it would be necessary for a receiving Short Message Entity ("SME") in the user's home network to provide the details of the emergency SMS message to a local SME in the currently visited network where the user requires the emergency assistance. Such mechanisms can be quite complex and costly, and may well introduce delays and ineffective assistance,

US2004/0198330 discloses a method for inputting a call number into a call number memory of a telecommunications terminal. In the method, the call number is entered into the call number memory of the telecommunications terminal by call number information being deseminated in a communications network, and by the terminal recording or updating the call number, which is derived from the received call number information, in the call number memory of the terminal.

US 2005/070314 A1 teaches of a telephone system, such as a mobile telephone system capable of handling text messages, in which address signals for telephone communication may be in one of first and second signal formats such as dialled numeric signals and alpha-numeric signals. An SMS router can distinguish between the numeric and alpha-numeric signals, and direct numeric address signals to a short message service center.

According to a first aspect of the invention, there is provided a method in a wireless communication network for routing a short message to a local destination as claimed in independent claim 1.

According to a second aspect of the invention, there is provided a wireless communication network configured to route a short message to a local destination as claimed in independent claim 8.

### BRIEF DESCRIPTION OF THE DRAWINGS

FIG. 1 is an exemplary environment in which a wireless communication system in accordance with at least one of the preferred embodiments may be practiced;
FIG. 2 is an exemplary flowchart illustrating a process of routing a short message originated by a visiting mobile device to a local short message service center in a wireless communication network in accordance with at least one of the preferred embodiments;
FIG. 3 is an exemplary block diagram of a wireless communication network configured to route a short message to a local destination in accordance with at least one of the preferred embodiments;
FIG. 4 is an exemplary flowchart illustrating a process of routing a short message originated by a mobile device to a local short message service center by the mobile device in accordance with at least one of the preferred embodiments; and
FIG. 5 is an exemplary block diagram of a wireless mobile communication device configured to route a short message to a local destination in accordance with at least one of the preferred embodiments.

### SUMMARY

When a wireless communication network receives a short message from a visiting wireless mobile communication device ("mobile device") having a specific message destination such as an emergency center including police, fire station, and hospital, through the Short Message Service ("SMS"), the wireless communication network compares the message destination with a list of predefined short message destinations, and, if there is a match, routes the short message to a local SMS Service Center ("SMS-SC") instead of routing the SMS short message to the mobile device's home network SMS-SC. The wireless communication system may also send the short message to a local destination corresponding to the original message destination. Alternatively, the mobile device may receive the list of predefined short message destinations upon registering in a non-home network, and may use the list to replace the user-entered message destination with a corresponding local destination.

### DETAIL DESCRIPTION OF THE PREFERRED EMBODIMENTS

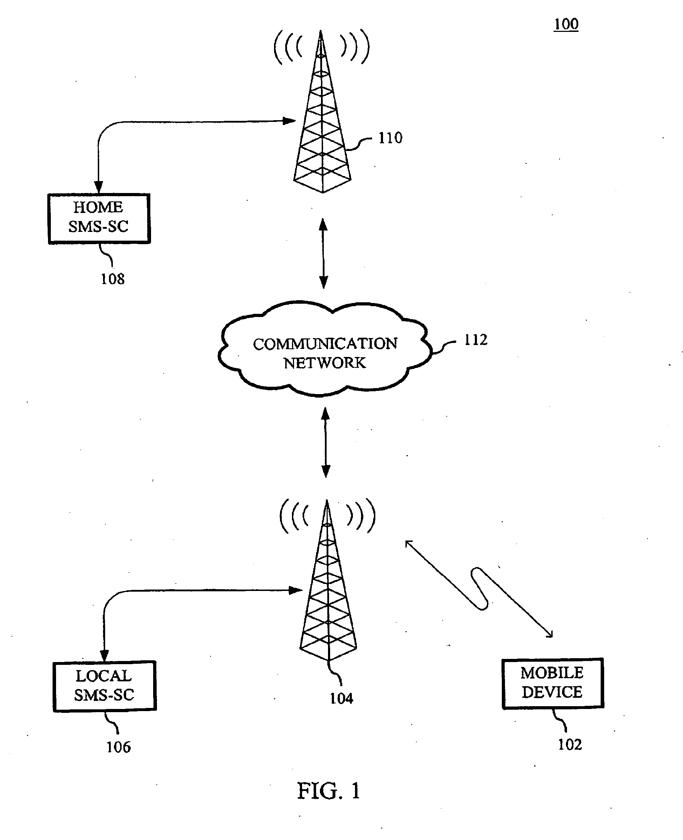

FIG. 1 is an exemplary environment 100 in which a wireless communication system in accordance with at least one of the preferred embodiments may be practiced. In this example, a mobile device 102 is registered in a non-home wireless communication network ("local network") 104, which has a local SMS-SC 106, Normally, an SMS message transmitted by the mobile device 102 will reach its home SMS-SC 108 associated with its home network 110 through the local wireless communication network 104 and a communication network 112 such as a traditional land-line communication network or wide area network 112. However, for a certain type of SMS messages, such as an SMS message requesting emergency assistance, the SMS message transmitted from the mobile device 102 is routed to the local SMS-SC 106 in the local network 104, and the content of the SMS message is sent on an entity providing local emergency assistance.

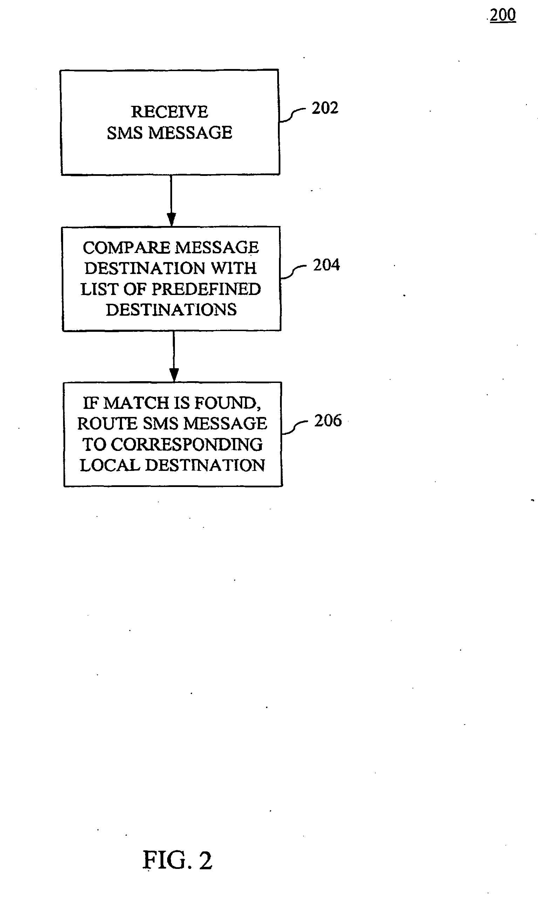

FIG. 2 is an exemplary flowchart 200 illustrating a process of routing a short message originated by a visiting mobile device 102 to local short message service center 106 in the local network 104 in accordance with at least one of the preferred embodiments. In block 202, the local network 104 receives an SMS message having a message destination from the mobile device 102. The message destination is the address of the intended recipient which the user of the mobile device 102 inserts, known as the Transport Protocol Destination Address ("TP-DA"). In the case of an emergency short message this TP-DA will be a short code such as 911, 112, 999, or any predefined code known to indicate that the short message concerns an emergency situation. The local network 104 has a list of predefined short message destinations, which is used to route the SMS message from the mobile device 102 to an appropriate local destination. The predefined short message destinations may be a plurality of emergency center destinations such as, but no limited to police, fire department, hospital, 911, 112, 999, or any other destinations associated with emergency centers. Each emergency center destination may have a corresponding short message destination for a locally located emergency center. Although the mobile device 102 automatically inserts the routing information, i.e. the address of the home SMS-SC, the local network 104 evaluates the TP-DA and routes the short message to an appropriate SC. In block 204, the local network 104 compares the message destination, or TP-DA, with the list of predefined short message destinations. If a match is found in block 204, the local network 104 route the SMS message from the mobile device 102 to a local destination corresponding to the matching predefined short message destination of the list of predefined short message destinations in block 206. The local destination may be a local SMS-SC 106 or a locally located emergency center. The local network 104 may route the SMS message a local destination in various ways including: replacing the original message destination with the local destination and transmitting the short message to the local destination; forwarding the short message to the local destination; and generating a new short message having the local destination, appending the original short message to the new short message, and transmitting the new short message having the appended short message to the local destination.

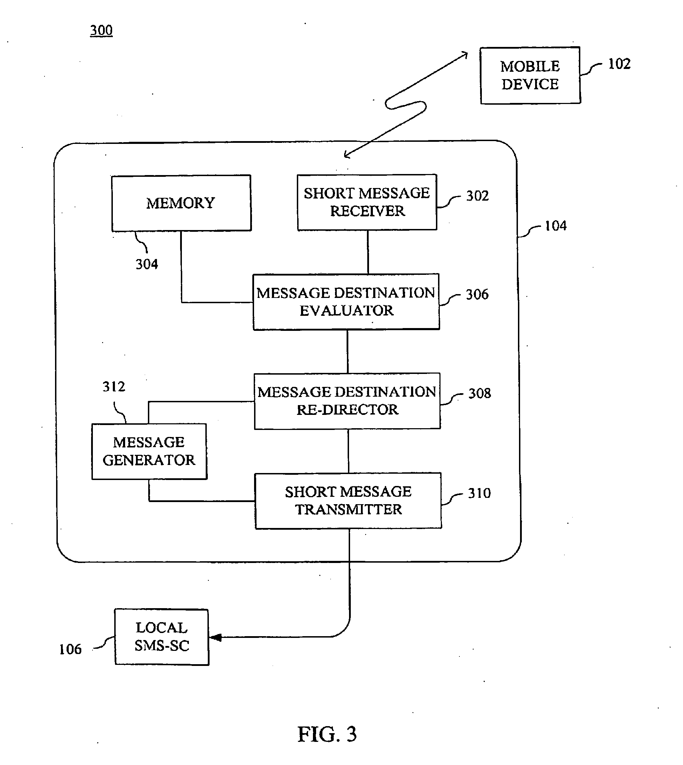

FIG. 3 is an exemplary block diagram 300 of the local network 104 configured to route a short message to a local destination in accordance with at least one of the preferred embodiments. The local network 104 has a short message receiver 302 configured to receive a short message having a message destination from a locally registered mobile device such as the mobile device 102. The local network 104 has a memory device 304, which is configured to store the previously described list of predefined short message destinations. A message destination evaluator 306 is coupled to both the short message receiver 302 and the memory 304, and is configured to match the message destination with a predefined short message destination of the list of predefined short message destinations in the memory 304. A message destination re-director 308 is couple to the message destination evaluator 306, and is configured to re-direct the short message to a local destination corresponding to the matching predefined short message destination of the list of predefined short message destinations. The message destination re-director 308 may be further configured to replace the message destination with the local destination. A short message transmitter 310 is coupled to the message destination re-director 308 and is configured to transmit the short message to the local destination such as the local SMS-SC 106. The short message transmitter 310 may be further configured to forward the short message to the local destination. The local network 104 may also have a message generator 312 coupled to the message destination re-director 308 and the short message transmitter 310, and configured to generate a new short message having the local destination and to append the short message to the new short message.

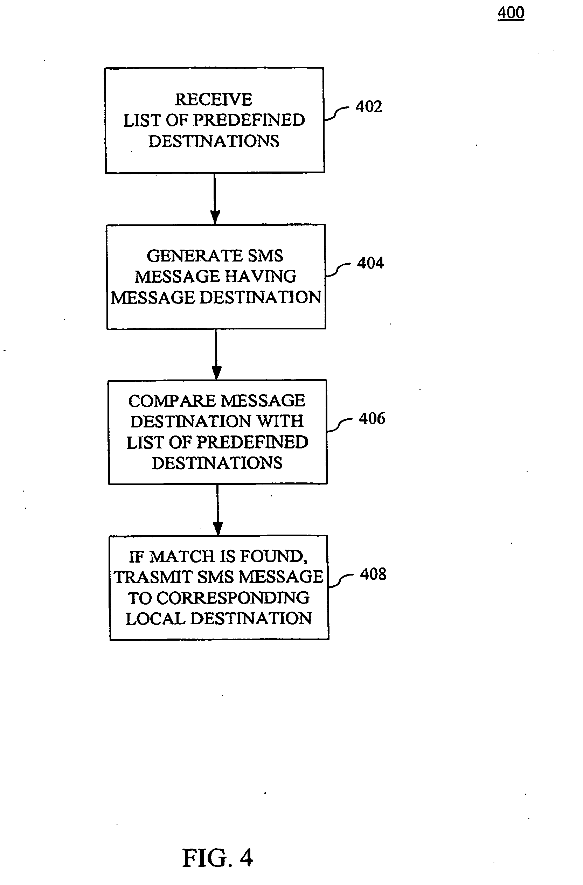

Alternatively, the mobile device 102 may direct the SMS message to an appropriate local destination such as the local SMS-SC 106. FIG. 4 is an exemplary flowchart 400 illustrating a process of routing the SMS message originated by the mobile device 102 to the local SMS-SC 106 by the mobile device 102 in accordance with at least one of the preferred embodiments. In block 402, the mobile device 102 receives the list of predefined short message destinations, which has been described previously. The mobile device 102 may receive the list of predefined short message destinations upon registering in a non-home network of the mobile device 102 such as the local network 104, In block 404, the mobile device 102 generate an SMS message having a message destination, and compares the message destination with the list of predefined short message destinations in block 406. If the message destination matches a predefined short message destination of the list of predefined short message destinations, the mobile device 102 transmits the SMS message to a local destination corresponding to the matching predefined short message destination of the list of predefined short message destinations in block 408. The mobile device 102 may transmit the SMS message to the local destination by replacing the original message destination with the local destination corresponding to the matching predefined short message destination of the local list of predefined local destination.

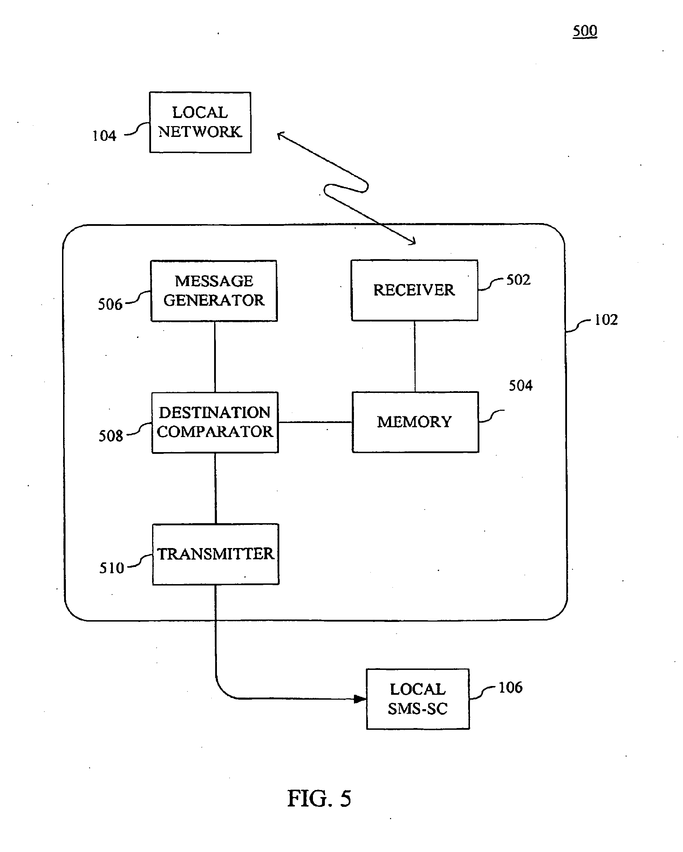

FIG. 5 is an exemplary block diagram 500 of the mobile device 102 configured to route a short message to the local SMS-SC 106 in accordance with at least one of the preferred embodiments. The mobile device 102 has a receiver 502, which is configured to receive the list of predefined short message destinations previously described, from the local network 104, and has a memory device 504 coupled to the receiver 502, which is configured to store the list of predefined short message destinations. The receiver 502 may be configured to receive the list of predefined short message destinations only after the mobile device 102 registers in a non-home network such as the local network 104. The mobile device 102 also has a short message generator 506, which is configured to generate a short message having a message destination. A destination comparator 508 is coupled to the memory device 504 and the short message generator 506, and is configured to match the message destination with a predefined short message destination of the list of predefined short message destinations stored in the memory device 504. A transmitter 510 is coupled to the destination comparator 508, and is configured to transmit the short message to a local destination corresponding to the matching predefined short message destination of the list of predefined short message destinations. The destination comparator 508 may be further configured to replace the message destination with the local destination corresponding to the matching predefined short message destination of the local list of predefined local destination.

While the preferred embodiments of the invention have been illustrated and described, it is to be understood that the invention is not so limited.

One aspect provides a method in a wireless communication network for routing a short message to a local destination, the wireless communication network having a list of predefined short message destinations, the method comprising: receiving a short message having a message destination; comparing the message destination with the list of predefined short message destinations; and if the message destination matches a predefined short message destination of the list of predefined short message destinations, routing the short message to a local destination corresponding to the matching predefined short message destination of the list of predefined short message destinations.

The list of predefined short message destinations may include a plurality of emergency center destinations, each emergency center destination of the plurality of emergency center destinations having a corresponding short message destination for a locally located emergency center.

The local destination corresponding to the matching predefined short message destination of the list of predefined short message destinations may include a local short message service center.

The receiving of a short message having a message destination may include: receiving a short message having a message destination from a wireless mobile communication device registered in the wireless communication network.

The wireless mobile communication device registered in the wireless communication network may have a home network different from the wireless communication network.

The routing of the short message to a local destination corresponding to the matching predefined short message destination of the list of predefined short message destinations may include: replacing the message destination with the local destination; and transmitting the short message to the local destination.

The routing the short message to a local destination corresponding to the matching predefined short message destination of the list of predefined short message destinations may include: forwarding the short message to the local destination.

The routing the short message to a local destination corresponding to the matching predefined short message destination of the list of predefined short message destinations may include: generating a new short message having the local destination; appending the short message having the message destination to the new short message; and transmitting the new short message having the appended short message to the local destination.

Another aspect provides a wireless communication network configured to route a short message to a local destination, the wireless communication network comprising: a short message receiver configured to receive a short message having a message destination; memory configured to store a list of predefined short message destinations; a message destination evaluator coupled to the short message receiver and the memory, the message destination evaluator configured to match the message destination with a predefined short message destination of the list of predefined short message destinations; a message destination re-director couple to the message destination evaluator, the message destination re-director configured to re-direct the short message to a local destination corresponding to the matching predefined short message destination of the list of predefined short message destinations; and a short message transmitter coupled to the message destination re-director, the short message transmitter configured to transmit the short message to the local destination.

The list of predefined short message destinations may include a plurality of emergency center destinations, each emergency center destination of the plurality of emergency center destinations having a corresponding short message destination for a locally located emergency center.

The local destination corresponding to the matching predefined short message destination of the list of predefined short message destinations may include a local short message service center.

The message destination re-director may be further configured to replace the message destination with the local destination.

The short message transmitter may be further configured to forward the short message to the local destination.

The wireless communication network may further comprise: a message generator coupled to the message destination re-director and the short message transmitter, the message generator configured to generate a new short message having the local destination and to append the short message to the new short message.

Another aspect provides a method in a wireless mobile communication device for directing a short message to an appropriate local destination, the method comprising: receiving a list of predefined short message destinations; generating a short message having a message destination; comparing the message destination with the list of predefined short message destinations; and if the message destination matches a predefined short message destination of the list of predefined short message destinations, transmitting the short message to a local destination corresponding to the matching predefined short message destination of the list of predefined short message destinations.

The receiving of a list of predefined short message destinations may include: receiving a list of predefined short message destinations upon registering in a non-home network of the wireless mobile communication device.

The transmitting of the short message to a local destination corresponding to the matching predefined short message destination of the local list of predefined local destinations may include: replacing the message destination with the local destination corresponding to the matching predefined short message destination of the local list of predefined local destination.

The local destination corresponding to the matching predefined short message destination of the list of predefined short message destinations may include a local short message service center.

The list of predefined short message destinations may include a plurality of emergency center destinations, each emergency center destination of the plurality of emergency center destinations having a corresponding short message destination for a locally located emergency center.

Another aspect provides a wireless mobile communication device configured to direct a short message to an appropriate local destination, the wireless mobile communication device comprising: a receiver configured to receive a list of predefined short message destinations; memory coupled to the receiver, the memory configured to store the received list of predefined short message destinations; a short message generator configured to generate a short message having a message destination; a destination comparator coupled to the memory and the short message generator, the destination comparator configured to match the message destination with a predefined short message destination of the list of predefined short message destinations; and a transmitter coupled to the destination comparator, the transmitter configured to transmit the short message to a local destination corresponding to the matching predefined short message destination of the list of predefined short message destinations.

The receiver may be further configured to receive the list of predefined short message destinations after the wireless mobile communication device registers in a non-home network of the wireless mobile communication device.

The destination comparator may be further configured to replace the message destination with the local destination corresponding to the matching predefined short message destination of the local list of predefined local destination.

The list of predefined short message destinations may include a plurality of emergency center destinations, each emergency center destination of the plurality of emergency center destinations having a corresponding short message destination for a locally located emergency center.

## Claims

1. A method in a wireless communication network (104) for routing a short message, the wireless communication network (104) being a local non-home network within which a mobile communication device (102) is registered to operate, the wireless communication network (104) having a list of predefined emergency center destinations which are numeric short codes known to indicate emergency assistance, the method comprising:
receiving a short message originated by the mobile communication device (102) in the wireless communication network (104), the short message having a message destination;
comparing the message destination with the list of predefined emergency center destinations which are the numeric short codes known to indicate emergency assistance;
if the message destination is a numeric short code matching one of the predefined emergency center destinations of the list of predefined emergency center destinations, routing the short message to a locally-located emergency center corresponding to the matching predefined emergency center destination; and
otherwise, routing the short message to a home short message service center (108) of a home network (110) of the mobile communication device (102).

2. The method of claim 1, wherein each emergency center destination of the plurality of emergency center destinations has a corresponding short message destination for a locally-located emergency center.

3. The method of claim 1, wherein the message destination of the short message is either 911, 112, 999 or other destinations associated with emergency centers.

4. The method of claim 1, wherein the locally-located emergency center is associated with either police, fire department, or hospital.

5. The method of claim 1, wherein routing the short message to the locally-located emergency center corresponding to the matching predefined emergency center destination of the list of predefined emergency center destinations includes:
replacing the message destination with the locally-located emergency center; and
transmitting the short message to the locally-located emergency center.

6. The method of claim 1, wherein routing the short message to a locally-located emergency center corresponding to the matching predefined emergency center destination of the list of predefined emergency center destinations includes:
forwarding the short message to the locally-located emergency center.

7. The method of claim 1, wherein routing the short message to a locally-located emergency center corresponding to the matching predefined emergency center destination of the list of predefined emergency center destinations includes:
generating a new short message having the locally-located emergency center;
appending the short message having the locally-located emergency center to the new short message; and
transmitting the new short message having the appended short message to the locally-located emergency center.

8. A wireless communication network (104) configured to route a short message, the wireless communication network (104) being a local non-home network within which a mobile communication device (102) is registered to operate, the wireless communication network (104) comprising:
a short message receiver (302) configured to receive a short message originated by the mobile communication device (102) in the wireless communication network (102), the short message having a message destination;
memory (304) configured to store a list of predefined emergency center destinations which are numeric short codes known to indicate emergency assistance;
a message destination evaluator (306) coupled to the short message receiver (302) and the memory (304), the message destination evaluator (306) configured to match the message destination with a predefined emergency center destination of the list of predefined emergency center destinations;
a message destination re-director (308) coupled to the message destination evaluator (306); if the message destination is a numeric short code matching one of the predefined emergency center destinations of the list the message destination re-director (308) being configured to re-direct the short message to a locally-located emergency center corresponding to the matching predefined emergency center destination; if not, the message destination re-director being configured to route the short message to a home short message service center (108) of a home network (110) of the mobile communication device (102); and
a short message transmitter (310) coupled to the message destination re-director (308), the short message transmitter (310) configured to transmit the short message to the locally-located emergency center.

9. The wireless communication network (104) of claim 8, wherein the message destination of the short message is either 911, 112, or 999.

10. The wireless communication network (104) of claim 8, wherein the message destination re-director (308) is further configured to replace the message destination with the locally-located emergency center.

11. The wireless communication network (104) of claim 8, wherein the short message transmitter (310) is further configured to forward the short message to the locally-located emergency center.

12. The wireless communication network (104) of claim 8, further comprising:
a message generator (312) coupled to the message destination re-director (308) and the short message transmitter (310), the message generator (312) configured to generate a new short message having the locally-located emergency center and to append the short message to the new short message.

## Patentansprüche

1. Verfahren in einem drahtlosen Kommunikationsnetzwerk (104) zum Leiten einer Kurznachricht, wobei das drahtlose Kommunikationsnetzwerk (104) ein lokales Nicht-Heimat-Netzwerk ist, in dem eine mobile Kommunikationsvorrichtung (102) zu arbeiten registriert ist, wobei das drahtlose Kommunikationsnetzwerk (104) eine Liste von vordefinierten Notfallzentrumszielen hat, die numerische Kurzcodes sind, von denen bekannt ist, eine Notfallunterstützung anzuzeigen, wobei das Verfahren aufweist:
Empfangen einer Kurznachricht von der mobilen Kommunikationsvorrichtung (102) in dem drahtlosen Kommunikationsnetzwerk (104), wobei die Kurznachricht ein Nachrichtenziel hat;
Vergleichen des Nachrichtenziels mit der Liste von vordefinierten Notfallzentrumszielen, die numerische Kurzcodes sind, die bekanntermaßen eine Notfallunterstützung anzeigen;
wenn das Nachrichtenziel ein numerischer Kurzcode ist, der mit einem der vordefinierten Notfallzentrumsziele der Liste von vordefinierten Notfallzentrumszielen übereinstimmt, Leiten der Kurznachricht an ein lokal vorhandenes Notfallzentrum, das dem übereinstimmenden vordefinierten Notfallzentrumsziel entspricht; und
ansonsten, Leiten der Kurznachricht an ein Heimat-Kurznachrichten-Dienstzentrum (108) eines Heimatnetzwerks (110) der mobilen Kommunikationsvorrichtung (102).

2. Verfahren gemäß Anspruch 1, wobei jedes Notfallzentrumsziel der Vielzahl von Notfallzentrumszielen ein entsprechendes Kurznachrichtenziel für ein lokal vorhandenes Notfallzentrum hat.

3. Verfahren gemäß Anspruch 1, wobei das Nachrichtenziel der Kurznachricht entweder 911, 112 oder 999 oder andere Ziele ist, die zu Notfallzentren gehören.

4. Verfahren gemäß Anspruch 1, wobei das lokal vorhandene Notfallzentrum entweder zu Polizei, Feuerwehr oder Krankenhaus gehört.

5. Verfahren gemäß Anspruch 1, wobei ein Leiten der Kurznachricht an das lokal vorhandene Notfallzentrum, das dem übereinstimmenden vordefinierten Notfallzentrumsziel der Liste von vordefinierten Notfallzentrumszielen entspricht, umfasst:
Ersetzen des Nachrichtenziels mit dem lokal vorhandenen Notfallzentrum; und
Senden der Kurznachricht an das lokal vorhandene Notfallzentrum.

6. Verfahren gemäß Anspruch 1, wobei ein Leiten der Kurznachricht an das lokal vorhandene Notfallzentrum, das dem übereinstimmenden vordefinierten Notfallzentrumsziel der Liste von vordefinierten Notfallzentrumszielen entspricht, umfasst:
Weiterleiten der Kurznachricht an das lokal vorhandene Notfallzentrum.

7. Verfahren gemäß Anspruch 1, wobei ein Leiten der Kurznachricht an das lokal vorhandene Notfallzentrum, das dem übereinstimmenden vordefinierten Notfallzentrumsziel der Liste von vordefinierten Notfallzentrumszielen entspricht, umfasst:
Erzeugen einer neuen Kurznachricht mit dem lokal vorhandenen Notfallzentrum;
Anhängen der Kurznachricht mit dem lokal vorhandenen Notfallzentrum an die neue Kurznachricht; und
Senden der neuen Kurznachricht mit der angehängten Kurznachricht an das lokal vorhandene Notfallzentrum.

8. Drahtloses Kommunikationsnetzwerk (104), das konfiguriert ist, eine Kurznachricht zu leiten, wobei das drahtlose Kommunikationsnetzwerk (104) ein lokales Nicht-Heimat-Netzwerk ist, in dem eine mobile Kommunikationsvorrichtung (102) zu arbeiten registriert ist, wobei das drahtlose Kommunikationsnetzwerk (104) aufweist:
einen Kurznachrichten-Empfänger (302), der konfiguriert ist, eine Kurznachricht von der mobilen Kommunikationsvorrichtung (102) in dem drahtlosen Kommunikationsnetzwerk (104) zu empfangen, wobei die Kurznachricht ein Nachrichtenziel hat;
einen Speicher (304), der konfiguriert ist, eine Liste von vordefinierten Notfallzentrumszielen zu speichern, die numerische Kurzcodes sind, die bekanntermaßen eine Notfallunterstützung anzeigen;
einen Nachrichtenziel-Evaluierer (306), der mit dem Kurznachrichten-Empfänger (302) und dem Speicher (304) verbunden ist, wobei der Nachrichtenziel-Evaluierer (306) konfiguriert ist, das Nachrichtenziel mit einem vordefinierten Notfallzentrumsziel der Liste von vordefinierten Notfallzentrumszielen zu vergleichen;
einen Nachrichtenziel-Umleiter (308), der mit dem Nachrichtenziel-Evaluierer (306) verbunden ist, wenn das Nachrichtenziel ein numerischer Kurzcode ist, der mit einem der vordefinierten Notfallzentrumsziele der Liste übereinstimmt, wobei der Nachrichtenziel-Umleiter (308) konfiguriert ist, die Kurznachricht an ein lokal vorhandenes Notfallzentrum um- bzw. weiterzuleiten, das dem übereinstimmenden vordefinierten Notfallzentrumsziel entspricht;
wenn nicht, ist der Nachrichtenziel-Umleiter (308) konfiguriert, die Kurznachricht an ein Heimat-Kurznachrichten-Dienstzentrum (108) eines Heimatnetzwerks (110) der mobilen Kommunikationsvorrichtung (102) zu leiten; und
einen Kurznachrichten-Sender (310), der mit dem Nachrichtenziel-Umleiter (308) verbunden ist, wobei der Kurznachrichten-Sender (310) konfiguriert ist, die Kurznachricht an das lokal vorhandene Notfallzentrum zu senden.

9. Drahtloses Kommunikationsnetzwerk (104) gemäß Anspruch 8, wobei das Nachrichtenziel der Kurznachricht entweder 911, 112 oder 999 ist.

10. Drahtloses Kommunikationsnetzwerk (104) gemäß Anspruch 8, wobei der Nachrichtenziel-Umleiter (308) weiter konfiguriert ist, das Nachrichtenziel mit dem lokal vorhandenen Notfallzentrum zu ersetzen.

11. Drahtloses Kommunikationsnetzwerk (104) gemäß Anspruch 8, wobei der Kurznachrichten-Sender (310) weiter konfiguriert ist, die Kurznachricht an das lokal vorhandene Notfallzentrum weiterzuleiten.

12. Drahtloses Kommunikationsnetzwerk (104) gemäß Anspruch 8, das weiter aufweist:
einen Nachrichten-Erzeuger (312), der mit dem Nachrichtenziel-Umleiter (308) und dem Kurznachrichten-Sender (310) verbunden ist, wobei der Nachrichten-Erzeuger (312) konfiguriert ist, eine neue Kurznachricht mit dem lokal vorhandenen Notfallzentrum zu erzeugen und die Kurznachricht an die neue Kurznachricht anzuhängen.

## Revendications

1. Dans un réseau de communication sans fil (104), procédé de routage d'un message court, le réseau de communication sans fil (104) étant un réseau local autre que de rattachement auprès duquel un dispositif de communication mobile (102) est enregistré afin de fonctionner, le réseau de communication sans fil (104) possédant une liste de destinations de centres d'urgence prédéfinies qui sont des codes numériques abrégés connus pour indiquer une assistance en cas d'urgence, le procédé comprenant les étapes consistant à :
recevoir sur le réseau de communication sans fil (104) un message court envoyé par le dispositif de communication mobile (102), le message court ayant une destination du message ;
comparer la destination du message avec la liste des destinations de centres d'urgence prédéfinies qui sont des codes numériques abrégés connus pour indiquer une assistance en cas d'urgence ;
si la destination du message est un code numérique abrégé correspondant à l'une des destinations de centres d'urgence prédéfinies dans la liste des destinations de centres d'urgence prédéfinies, router le message court vers un centre d'urgence implanté localement qui est associé à la destination de centre d'urgence prédéfini qui correspond ; et
sinon, router le message court vers un centre de service de messages courts de rattachement (108) d'un réseau de rattachement (110) du dispositif de communication mobile (102).

2. Procédé selon la revendication 1, dans lequel chaque destination de centre d'urgence, dans la pluralité de destinations de centres d'urgence, possède une destination de message court correspondante pour un centre d'urgence implanté localement.

3. Procédé selon la revendication 1, dans lequel la destination du message du message court est soit 911, soit 112, soit 999, soit d'autres destinations associées à des centres d'urgence.

4. Procédé selon la revendication 1, dans lequel le centre d'urgence implanté localement est associé soit à la police, soit aux pompiers, soit à l'hôpital.

5. Procédé selon la revendication 1, dans lequel le routage du message court vers le centre d'urgence implanté localement qui est associé à la destination de centre d'urgence prédéfini qui correspond dans la liste des destinations de centres d'urgence prédéfinies comprend les étapes consistant à :
remplacer la destination du message par le centre d'urgence implanté localement ; et
émettre le message court vers le centre d'urgence implanté localement.

6. Procédé selon la revendication 1, dans lequel le routage du message court vers le centre d'urgence implanté localement qui est associé à la destination de centre d'urgence prédéfini qui correspond dans la liste des destinations de centres d'urgence prédéfinies comprend l'étape consistant à :
faire suivre le message court vers le centre d'urgence implanté localement.

7. Procédé selon la revendication 1, dans lequel le routage du message court vers le centre d'urgence implanté localement qui est associé à la destination de centre d'urgence prédéfini qui correspond dans la liste des destinations de centres d'urgence prédéfinies comprend les étapes consistant à :
produire un nouveau message court ayant le centre d'urgence implanté localement ;
concaténer le message court ayant le centre d'urgence implanté localement au nouveau message court ; et
émettre le nouveau message court ayant le message court concaténé vers le centre d'urgence implanté localement.

8. Réseau de communication sans fil (104) configuré pour router un message court, le réseau de communication sans fil (104) étant un réseau local autre que de rattachement auprès duquel un dispositif de communication mobile (102) est enregistré afin de fonctionner, le réseau de communication sans fil (104) comprenant :
un récepteur de messages courts (302) configuré pour recevoir sur le réseau de communication sans fil (104) un message court envoyé par le dispositif de communication mobile (102), le message court ayant une destination du message ;
une mémoire (304) configurée pour stocker une liste de destinations de centres d'urgence prédéfinies qui sont des codes numériques abrégés connus pour indiquer une assistance en cas d'urgence ;
un évaluateur de destination de message (306) relié au récepteur de messages courts (302) et à la mémoire (304), l'évaluateur de destination de message (306) étant configuré pour comparer la destination du message avec une destination de centre d'urgence prédéfini dans la liste des destinations de centres d'urgence prédéfinies ;
un redirecteur de destination de message (308) relié à l'évaluateur de destination de message (306) si la destination du message est un code numérique abrégé correspondant à l'une des destinations de centres d'urgence prédéfinies dans la liste, le redirecteur de destination de message (308) étant configuré pour rediriger le message court vers un centre d'urgence implanté localement qui est associé à la destination de centre d'urgence prédéfini qui correspond ;
sinon, le redirecteur de destination de message étant configuré pour router le message court vers un centre de service de messages courts de rattachement (108) d'un réseau de rattachement (110) du dispositif de communication mobile (102) ; et
un émetteur de messages courts (310), relié au redirecteur de destination de message (308), l'émetteur de messages courts (310) étant configuré pour émettre le message court vers un centre d'urgence implanté localement.

9. Réseau de communication sans fil (104) selon la revendication 8, dans lequel la destination du message du message court est soit 911, soit 112, soit 999.

10. Réseau de communication sans fil (104) selon la revendication 8, dans lequel le redirecteur de destination de message (308) est en outre configuré pour remplacer la destination de message par le centre d'urgence implanté localement.

11. Réseau de communication sans fil (104) selon la revendication 8, dans lequel l'émetteur de messages courts (310) est en outre configuré pour faire suivre le message court vers le centre d'urgence implanté localement.

12. Réseau de communication sans fil (104) selon la revendication 8, comprenant en outre :
un générateur de messages (312), relié au redirecteur de destination de message (308) et à l'émetteur de messages courts (310), le générateur de messages (312) étant configuré pour produire un nouveau message court ayant le centre d'urgence implanté localement et pour concaténer le message court au nouveau message court.
